# EUROPÄISCHE PATENTSCHRIFT

(11) **EP 2 486 489 B1**
(45) Veröffentlichungstag und Bekanntmachung des Hinweises auf die Patenterteilung: **25.05.2016**
(21) Anmeldenummer: 10760692.3
(22) Anmeldetag: 04.10.2010
(51) Int. Cl.: G06F 13/38, G06F 13/42

(54) **PORTABLER DATENTRÄGER MIT ZUSATZFUNKTIONALITÄT**
PORTABLE DATA CARRIER HAVING ADDITIONAL FUNCTIONALITY
SUPPORT DE DONNÉES PORTABLE ÉQUIPÉ D'UNE FONCTIONNALITÉ SUPPLÉMENTAIRE

(30) Priorität: 05.10.2009 DE 102009048240
(43) Veröffentlichungstag der Anmeldung: 15.08.2012
(73) Patentinhaber: Giesecke & Devrient GmbH, 81677 München (DE)
(72) Erfinder: HEIDER, Axel, 81673 München (DE)
(86) Internationale Anmeldenummer: PCT/EP2010/064740
(87) Internationale Veröffentlichungsnummer: WO 2011/042387

(56) Entgegenhaltungen:
- EP-A1- 1 450 299
- WO-A1-2007/138021
- DE-A1-102006 054 025
- US-A- 5 452 431
- US-A1- 2009 152 361

## Beschreibung

Die vorliegende Erfindung betrifft ein Verfahren in einem portablen Datenträger, beispielsweise einer Speicherkarte, zum Ausführen von Zusatzfunktionalitäten auf dem Datenträger mittels herkömmlicher, von außerhalb des Datenträgers angewiesener Lese- und Schreibzugriffe auf den Datenträger sowie einen entsprechend eingerichteten Datenträger.

Portable Datenträger, die im Wesentlichen als Speichermedien ausgebildet sind, können weitere Funktionalitäten unterstützen, beispielsweise im Rahmen einer Authentisierung eines Nutzers gegenüber dem Datenträger oder zum Ver- und Entschlüsseln von auf dem Datenträger gespeicherten Daten. Um einen Zugriff auf den Datenträger von außerhalb des Datenträgers einfach zu halten, welcher im Fall eines einfachen Speichermediums mittels herkömmlicher Schreib- und Lesekommandos erfolgt, ist es erstrebenswert, auch Zusatzfunktionalitäten, welche der Datenträger in Form geeigneter interner Zusatzkommandos bereitstellt, mittels der bekannten, von außerhalb des Datenträgers anzuweisenden Schreib- und Lesekommandos zu initiieren. Auf diese Weise kann es unterbleiben, dass mit dem Datenträger in Verbindung stehende Lesegeräte und/oder Datenverarbeitungsendgeräte mit zusätzlichen Treibern ausgestattet werden müssen, um die erweiterten Funktionalitäten des Datenträgers auszuführen. Des Weiteren soll keine zusätzliche Middleware erforderlich sein und keine neue Abhängigkeit von verschiedenen Betriebssystemen zugreifender Datenverarbeitungsendgeräte entstehen.

Die WO 2008/058705 A2 beschreibt in diesem Zusammenhang einen entsprechenden portablen Datenträger, welcher als Speichermedium ausgebildet ist und ein Zusatzmodul umfasst. Zumindest eine Adresse des Speichers des Datenträgers ist als so genannte Zusatzfunktionsspeicheradresse ausgebildet. Wird auf diese spezielle Zusatzfunktionsspeicheradresse von außerhalb des Datenträgers in herkömmliche Weise zugegriffen, so leitet ein Controller des Datenträgers diesen Zugriff an das Zusatzmodul zur weiteren Verarbeitung weiter. Die Zusatzfunktionalität, beispielsweise eine Sicherheitsfunktionalität, welche über den Zugriff auf die Zusatzfunktionsspeicheradresse initiiert wird, kann mittels Parametern oder dergleichen weiter spezifiziert werden. Diese Parameter können beispielsweise mittels eines herkömmlichen Schreibkommandos zusammen mit einem entsprechenden, die Zusatzfunktionalität aufrufenden Befehl an die Stelle der Zusatzfunktionsspeicheradresse geschrieben werden. Auf andere Adressen des Speichers kann in herkömmliche Weise zum Speichern oder Auslesen von Daten mittels der Schreib- und Lesekommandos zugegriffen werden.

Nachteilig an dieser Lösung ist, dass allen Nutzern des Datenträgers entsprechende Schreibrechte eingeräumt werden müssen, um Zusatzfunktionalitäten auszuführen. Dies ist nicht immer erwünscht, da damit automatisch ein Verändern des gewöhnlichen Speichers des Datenträgers ermöglicht wird. Weiterhin ist es zum Ausführen einer Zusatzfunktionalität in der beschriebenen Weise erforderlich, dass ein Nutzer die entsprechenden internen Kommandos des Datenträgers, insbesondere deren korrekte Syntax und die erforderlichen und optionalen Parameter, kennt.

Auch US 2009/0152361 A1 verwendet Schreibkommandos einer Massenspeicherkarte, um mit diesen Kommandos versteckte Kommandos an die Kontaktloseinheit der Massenspeicherkarte zu übertragen. Die Antwort der Kontaktloseinheit wird mithilfe eines Lesekommandos abgeholt. Ähnlich beschreibt WO 2007/138021 A1 ein Lesekommando zu verwenden, um von einer funktionalen Komponente der Massenspeicherkarte eine Antwort auf ein mithilfe eines Schreibkommandos erfolgten Aufruf abzuholen. EP 1450 299 A1 betrifft eine herkömmliche IC-Karte, welche für jede aufzurufende Funktionalität ein zugeordnetes Kommando aufweist, wobei die IC-Karte eine Multiapplikationskarte ist und bezüglich der Verwaltung mehrerer paralleler Sitzungen optimiert ist.

Aufgabe der vorliegenden Erfindung ist es demnach, ein Ausführen von Zusatzfunktionalitäten in einem ansonsten als Speichermedium ausgebildeten portablen Datenträger auf einfache und sichere Weise zu ermöglichen.

Diese Aufgabe wird durch ein Verfahren, einen portablen Datenträger und ein System mit den Merkmalen der unabhängigen Ansprüche gelöst. Vorteilhafte Ausgestaltungen und Weiterbildungen sind in den abhängigen Ansprüchen angegeben.

Ein erfindungsgemäßer portabler Datenträger umfasst demnach einen Speicher und eine Steuereinrichtung zum Ausführen einer Zusatzfunktionalität in dem Datenträger sowie eine Datenkommunikationsschnittstelle. Die Steuereinrichtung ist dabei eingerichtet, die Zusatzfunktionalität aufgrund des einen Zugriffes eines herkömmlichen, von außerhalb des Datenträgers angewiesenen Lesekommandos auf den Speicher aufzurufen. Erfindungsgemäß ist die Steuereinrichtung eingerichtet, zum Spezifizieren der Zusatzfunktionalität jeweils einen weiteren Zugriff zumindest eines weiteren herkömmlichen Lesekommandos auf den Speicher des Datenträgers auszuwerten und zu verarbeiten.

Im Folgenden werden die von dem Datenträger empfangenen Kommandos auch als angewiesene Kommandos bezeichnet. Das weitere Lesekommando, welches die Zusatzfunktionalität näher spezifiziert, wird vor dem Lesekommando empfangen, welches die Zusatzfunktionalität auslöst.

Auf diese Weise können Zusatzfunktionalitäten des Datenträgers auf einfache und sichere Weise ausgeführt werden, wobei ein Ausführen einer Zusatzfunktionalität sowohl ein Spezifizieren der Zusatzfunktionalität als auch das Aufrufen derselben umfasst. Jeweils ein Aufruf eines herkömmlichen Lesekommandos von außerhalb des Datenträgers bewirkt jeweils genau einen Zugriff des Lesekommandos auf den Speicher des Datenträgers, wobei ein solcher Zugriff das Aufrufen der Zusatzfunktionalität bewirkt und ein oder mehrere weitere solcher Zugriffe dem Spezifizieren der Zusatzfunktionalität dienen. Es sind lediglich Zugriffe herkömmlicher Lesekommandos - im Folgenden auch als Lesekommandozugriffe oder lesende Zugriffe bezeichnet - auf den Datenträger erforderlich, nicht jedoch eventuell unerwünschte Zugriffe eines Schreibkommandos. Damit kann vorgegebenen Sicherheitsanforderungen an den Datenträger und das Datenverarbeitungsendgerät, mittels dessen auf den Datenträger zugegriffen wird, Rechnung getragen werden. Trotz dieser eingeschränkten, nur lesenden Zugriffsmöglichkeit auf den Datenträger besteht volle Flexibilität in der Verwendung der Zusatzfunktionalität, da auch ein Spezifizieren der Zusatzfunktionalität mittels Lesekommandozugriffen ermöglicht wird. Jeder Nutzer, auch derjenige mit eingeschränkten Rechten bezüglich des Zugriffs auf den Datenträger, kann die Zusatzfunktionalität in einer von ihm spezifizierbaren Weise nutzen, wobei die restlichen Inhalte des Datenträgers vor unerlaubter Änderung geschützt sind.

Ein Spezifizieren der Zusatzfunktionalität kann gemäß einer ersten bevorzugten Ausführungsform ein teilweises oder vollständiges Kodieren der Zusatzfunktionalität umfassen. Lediglich mittels Lesekommandozugriffen auf den Speicher des Datenträgers, wobei jeder dieser Zugriffe durch genau ein von außerhalb des Datenträgers angewiesenes, herkömmliches Lesekommando bewirkt wird, kann also die Zusatzfunktionalität beispielsweise aus vorgegebenen Unterroutinen zusammengestellt oder aber initial kodiert werden. D.h. prinzipiell kann der Datenträger über reine Lesekommandozugriffe im Rahmen dessen, was eine Steuereinheit des Datenträgers bereitstellt und unterstützt, frei programmiert werden.

Gemäß einer zweiten bevorzugten Ausführungsform wird die Zusatzfunktionalität dadurch spezifiziert, dass Eingabedaten und Parameterdaten, welche die Zusatzfunktionalität erst endgültig festlegen und flexibel einsetzbar machen, mittels Lesekommandozugriffen auf den Speicher des Datenträgers definiert und damit an die Zusatzfunktionalität bzw. eine die Zusatzfunktionalität ausführende Steuereinrichtung des Datenträgers übergeben werden. Wiederum ist hier für jeden einzelnen Lesekommandozugriff genau ein von außerhalb des Datenträgers angewiesenes, herkömmliches Lesekommando erforderlich. Vorgegebene oder teilweise oder vollständig neu kodierte Zusatzfunktionalitäten des Datenträgers können auf diese Weise variabel verwendet und an verschiedene Anwendungen angepasst werden, ohne dass Schreibzugriff auf den Speicher des Datenträgers notwendig wäre.

Gemäß einer bevorzugten Ausführungsform des erfindungsgemäßen Verfahrens wird eine Zusatzfunktionalität mittels der folgenden Unterschritte ausgeführt: In einem ersten Schritt werden vorgegebene Speicheradressen des Speichers des Datenträgers mit Informationseinheiten des Datenträgers verknüpft. Danach wird zum Aufrufen und Spezifizieren der Zusatzfunktionalität auf verschiedene der vorgegebenen Speicheradressen lesend, also mittels herkömmlicher Lesekommandos, zugegriffen. Diejenigen Informationseinheiten, welche mit den vorgegebenen Speicheradressen verknüpft worden sind, auf die mittels der Lesekommandos zugegriffen worden ist, werden dann durch eine Steuereinrichtung des Datenträgers zum Ausführen der Zusatzfunktionalität in dem Datenträger verarbeitet. Dabei repräsentiert beispielsweise ein Teil der verarbeiteten Informationseinheiten Eingabedaten oder Parameterdaten der Zusatzfunktionalität oder ein Teil der verarbeiteten Informationseinheiten wird zum Kodieren des Zusatzfunktionalität mittels einer Mehrzahl der Informationseinheiten verwendet. Die Steuereinrichtung des Datenträgers erkennt und interpretiert jeweils einen Zugriff eines herkömmlichen Lesekommandos auf die vorgegebene Speicheradresse des Speichers als Eingabe derjenigen Informationseinheit, die mit der entsprechenden vorgegebenen Speicheradresse verknüpft ist.

Die Informationseinheiten des Datenträgers, welche mit den vorgegebenen Speicheradressen des Speichers verknüpft werden, können auf verschiedene Weise ausgebildet sein. Eine Informationseinheit kann beispielsweise eine durch die Steuereinrichtung auf dem Datenträger ausführbare Zusatzfunktionalität selbst bereitstellen. Gemäß einer bevorzugten Ausführungsform wird eine Reihe in dem Datenträger ausführbarer Zusatzfunktionalitäten in dieser Weise auswählbar bereitgestellt. Aber auch ein Eingabedatensatz oder ein Parameterdatensatz für eine Zusatzfunktionalität kann mittels einer Informationseinheit bereitgestellt werden, wobei wiederum vorzugsweise für jede Zusatzfunktionalität eine vorgegebene Menge von Eingabedaten und Parameterdaten derart auswählbar bereitgehalten werden. Gemäß einer verallgemeinerten Ausführungsform stellt eine Informationseinheit lediglich ein Zeichen oder eine Zeichenkette über einem vorgegebenen Alphabet bereit. Zeichen oder Zeichenketten dieses Alphabets dienen dabei zum Kodieren einer Zusatzfunktionalität oder zum Definieren von Eingabedaten oder Parameterdaten für eine vorgegebene oder erst zu kodierende Zusatzfunktionalität. Mittels einer Folge von Lesekommandozugriffen auf Speicheradressen, welche mit Informationseinheiten in Form solcher Zeichen oder Zeichenketten verknüpft sind, kann prinzipiell eine beliebige Information kodiert und an die Steuereinrichtung des Datenträgers zum Verarbeiten, beispielsweise zum Interpretieren oder Kompilieren, übergeben werden.

Vorzugsweise ist eine vorgegebene Speicheradresse des Speichers des Datenträgers dadurch mit einer Informationseinheit des Datenträgers verknüpft, dass die Speicheradresse eine Referenz auf die Informationseinheit umfasst oder die Informationseinheit selbst speichert.

Die Steuereinrichtung des Datenträgers verarbeitet die Informationseinheiten zum Ausführen einer Zusatzfunktionalität in der Regel derart, dass eine mittels einer Mehrzahl von Informationseinheiten kodierte oder eine mittels einer Informationseinheit referenzierte Zusatzfunktionalität, gegebenenfalls unter Verwendung von mittels einer Mehrzahl von Informationseinheiten definierten oder mittels einer Informationseinheit referenzierten Eingabedaten oder Parameterdaten, ausgeführt wird. Mittels geeigneter Lesezugriffe auf vorgegebene Speicheradressen des Speichers kann ein Nutzer die Zusatzfunktionalität somit vollständig spezifizieren, d.h. zum einen die auszuführende Zusatzfunktionalität selbst auswählen oder sogar erst kodieren sowie notwendige oder optionale Eingabedaten sowie Parameter, welche der Zusatzfunktionalität zu übergeben sind, definieren und damit an die Steuereinrichtung des Datenträgers übergeben, welche eingerichtet ist, diese Lesezugriffe entsprechend zu interpretieren und die Zusatzfunktionalität demgemäß auszuführen.

Gemäß einer bevorzugten Ausführungsform des erfindungsgemäßen Verfahrens wird in dem Speicher des Datenträgers ein virtuelles Dateisystem bereitgestellt, wobei die vorgegebenen Speicheradressen eindeutig Verzeichnissen und Dateien des Dateisystems zugeordnet werden. Auf diese Weise können die vorgegebenen Speicheradressen einem Nutzer in einer ihm bekannten Weise präsentiert werden. Auch eine inhaltliche, hierarchische Organisation verschiedener Informationseinheiten wird durch ein Dateisystem unterstützt. Ein lesender Zugriff auf ein Verzeichnis oder eine Datei des Dateisystems wird dann wie ein lesender Zugriff auf die vorgegebene Speicheradresse interpretiert, die dem entsprechenden Verzeichnis oder der entsprechenden Datei zugeordnet ist. Eine Zuordnung von Verzeichnissen und Dateien zu vorgegebenen Speicheradresse kann mittels bekannter Techniken, beispielsweise einer so genannten Dateizuordnungstabelle ("file allocation table", FAT) oder dergleichen, geschehen.

Das Dateisystem kann dabei verschiedene ausgezeichnete Verzeichnisse umfassen. Ein Zusatzfunktionalitätenverzeichnis beispielsweise umfasst für jede in dem Datenträger bereitgestellte Zusatzfunktionalität eine Datei. D.h. eine solche Datei ist einer vorgegebenen Speicheradresse zugeordnet, welche ihrerseits mit der entsprechenden, von der Steuereinrichtung ausführbaren Zusatzfunktionalität verknüpft ist. In analoger Weise ist jede Datei eines Eingabedaten- und Parameterdatenverzeichnisses des Dateisystems einer solchen vorgegebenen Speicheradresse zugeordnet, die mit einem entsprechenden Eingabedatensatz bzw. Parameterdatensatz verknüpft ist. Es ist möglich, für verschiedene Eingabedatensätze verschiedene Unterverzeichnisse vorzusehen, beispielsweise abhängig von der Größe der jeweiligen Eingabedatensätze. Das gleiche gilt natürlich für Parameterdatensätze. Dort kann beispielsweise ein Unterverzeichnis für Standardparameter angelegt werden und weitere Unterverzeichnisse für solche Parameterdaten, die nur in speziellen Fällen benötigt werden. In sehr allgemeiner Form kann ein so genanntes Alphabetverzeichnis bereitgestellt werden. Eine Datei in diesem Verzeichnis entspricht einem Zeichen oder einer Zeichenkette eines Alphabets und ist entsprechend einer vorgegebenen Speicheradresse des Speichers zugeordnet, welche mit der Informationseinheit in Form des Zeichens oder der Zeichenkette verknüpft ist. Lesende Zugriffe auf solche Dateien ermöglichen somit eine Kodierung frei wählbarer Information, wie vorstehend detailliert beschrieben.

Gemäß einer weiteren bevorzugten Ausführungsform ist die Steuereinrichtung des Datenträgers eingerichtet, beim Verarbeiten der Informationseinheiten abhängig von den verarbeiteten Informationseinheiten dynamisch Daten zu erzeugen. Beispielsweise kann ein Lesezugriff auf eine vorgegebene Speicheradresse, welche mit einer Informationseinheit in Form eines Eingabedatensatzes verknüpft ist, die Steuereinrichtung dazu bringen, den entsprechenden Eingabedatensatz dynamisch zu erzeugen. Auch eine Zusatzfunktionalität oder Unterroutinen der Zusatzfunktionalität können in ausführbarer Form erst dann dynamisch erzeugt werden, wenn auf die vorgegebene Speicheradresse zugegriffen wird, welche mit der Zusatzfunktionalität verknüpft ist. Auf diese Weise können insbesondere Speicherressourcen des Datenträgers gespart werden. Die Steuereinheit kann weiterhin spezielle Anzeigedaten, beispielsweise in Form von HTML-Daten, dynamisch erzeugen, welche einen Zugriff auf den Datenträger mittels standardisierter Werkzeuge, beispielsweise einem Browser, erleichtern bzw. erst möglich machen.

Prinzipiell können in dem Datenträger beliebige Zusatzfunktionalitäten bereitgestellt oder in der vorstehend beschriebenen Weise kodiert werden. Bevorzugt werden Zusatzfunktionalitäten bereitgestellt, welche eine Authentisierung unterstützen, beispielsweise ein Anmelden eines Nutzers bei dem Datenträger. Auch ein Verschlüsseln und Entschlüsseln von Daten auf dem Datenträger kann mittels geeigneter Zusatzfunktionalitäten bereitgestellt werden. Beide Klassen von Zusatzfunktionalitäten können unter dem Begriff Sicherheitsfunktionalitäten zusammengefasst werden. Schließlich können Netzwerkfunktionalitäten vorgesehen sein, welche eine Datenkommunikation zwischen dem Datenträger und einer weiteren Instanz über ein Datenkommunikationsnetzwerk, beispielsweise über das Internet, unterstützen.

Erfindungsgemäß wird ein Zugriff auf den Speicher des Datenträgers durch ein Lesekommando angefordert. Tatsächlich muss aber weder ein Zugriff auf den Speicher erfolgen, noch muss die Adresse physisch existieren, da es ausreicht den angeforderten Zugriff auszuwerten, um die Zusatzfunktionalität (näher) zu bestimmen.

Ein erfindungsgemäßes System umfasst einen erfindungsgemäßen Datenträger sowie ein Datenverarbeitungsendgerät mit einer Leseeinrichtung zum Zugreifen auf den Datenträger über die Datenkommunikationsschnittstelle des Datenträgers mittels eines herkömmlichen Lesekommandos. Das Datenverarbeitungsendgerät ist somit eingerichtet, durch geeignete Lesezugriffe von außerhalb des Datenträgers auf vorgegebene Speicheradressen des Datenträgers das erfindungsgemäße Verfahren gemäß einer der beschriebenen Varianten auszuführen. Der Datenträger kann verschiedenartig ausgestaltet sein, beispielsweise in Form einer Speicherkarte, einer Chipkarte, eines USB-Tokens oder dergleichen. Das Datenverarbeitungsendgerät kann beispielsweise ein Personal Computer (PC), ein Notebook, ein Mobilfunkendgeräts oder dergleichen sein. Die Datenkommunikation zwischen dem Datenträger und dem Datenverarbeitungsendgerät erfolgt in der Regel kontaktbehaftet, aber auch eine kontaktlose Datenkommunikation ist alternativ oder zusätzlich möglich.

Die vorliegende Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen portablen Datenträgers und
- Figur 2: ein virtuelles Dateisystem in einem Speicher des Datenträgers aus Fig.1.

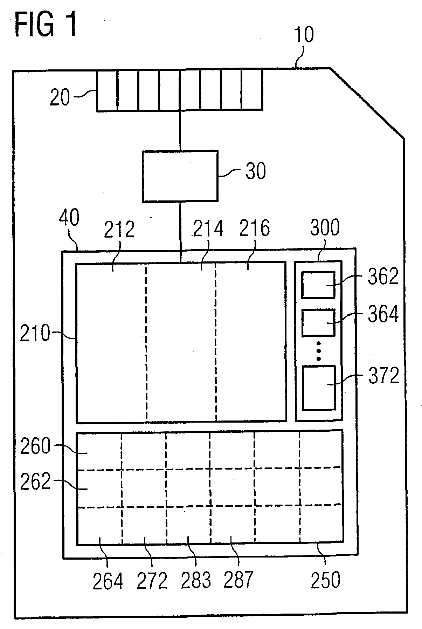

Mit Bezug auf Figur 1 ist ein portabler Datenträger 10 in Form einer Speicherkarte gezeigt. Dieser umfasst eine Datenkommunikationsschnittstelle 20 zur kontaktbehafteten Datenkommunikation mit einem geeigneten Lesegerät (nicht gezeigt), eine Steuereinrichtung 30 sowie einen Speicher 40. Alternativ oder zusätzlich zu der Datenkommunikationsschnittstelle 20 kann auch eine Antennenspule (nicht gezeigt) oder dergleichen zur kontaktlosen Datenkommunikation vorgesehen sein.

Die Steuereinrichtung 30 umfasst einen Controller des Datenträgers 10 sowie die notwendigen Softwaremittel, beispielsweise ein Betriebssystem, zum Steuern des Datenträgers 10. Die Funktion der Steuereinrichtung 30 wird nachstehend genauer beschrieben.

Der Speicher 40, beispielsweise ein nicht flüchtiger, wiederbeschreibbarer FLASH-Speicher, ist in verschiedene Bereiche eingeteilt. Der Bereich 210 dient einem Nutzer des Datenträgers zum Speichern von Daten, beispielsweise Texten, Bildern, Musikdaten und dergleichen, welche inhaltlich getrennt in den Unterbereichen 212, 214, 216 gespeichert werden können. In dem Bereich 300 sind Informationseinheiten des Datenträgers 10 gespeichert, beispielsweise durch die Steuereinrichtung 30 ausführbare Zusatzfunktionalitäten 362, 364 sowie zum Ausführen dieser Zusatzfunktionalitäten 362, 364 benötigte Parameterdaten oder Eingabedaten 372. Alternativ oder zusätzlich zu dem Speicher 40 kann der Datenträger 10 noch einen oder mehrere weitere, von dem Speicher 40 separate, auch verschiedenartige Speicher (nicht gezeigt) umfassen. Zumindest ein Teil der Informationseinheiten, beispielsweise die Zusatzfunktionalitäten 362,364, können dann beispielsweise in einem solchen zusätzlichen Speicher, der auch als ROM-Speicher ausgebildet sein kann, gespeichert sein. Ein dritter Bereich 250 des Speichers 40 umfasst eine Menge vorgegebener Speicheradressen 260, 262, 264, 283, 287 des Speichers 40, deren Funktion und Bedeutung nachfolgend detailliert beschrieben wird.

Der Datenträger 10 ist eingerichtet, über die Datenkommunikationsschnittstelle 20 mittels herkömmlicher Lese- und Schreibkommandos von außerhalb des Datenträgers angesprochen zu werden, mittels welcher ein Nutzer des Datenträgers 10 in dem Speicherbereich 210 des Speichers 40 gespeicherte Daten lesen kann bzw. dort Daten mittels eines Schreibkommandos speichern kann. Dazu wird der Datenträger 10 über eine geeignete Lesevorrichtung, beispielsweise einen Kartenleser, mit einem Datenverarbeitungsendgerät, wie z.B. einem PC, einem Notebook oder einem Mobilfunkendgerät, verbunden. Von dem Datenverarbeitungsendgerät aus kann ein Nutzer dann auf die verschiedenen Speicherbereiche 210, 250 des Speichers 40 mittels der herkömmlichen Schreib- und Lesekommandos zugreifen. Insofern unterscheidet sich der Datenträger 10 nicht von einer herkömmlichen Speicherkarte.

Im Gegensatz zu einer herkömmlichen Speicherkarte umfasst der Datenträger 10 Zusatzfunktionalitäten 362,364, mittels derer beispielsweise eine Authentisierung eines Servers im Internet gegenüber dem Datenträger 10 möglich wird. Weiterhin stellt der Datenträger 10 kryptographische Zusatzfunktionalitäten 364 zur Verfügung, die ein Verschlüsseln und Entschlüsseln von Daten auf dem Datenträger 10 ermöglichen. Diese Zusatzfunktionalitäten 362, 364 können mittels herkömmlicher Lesekommandozugriffe auf vorgegebene Speicheradressen 260, 262, 264, 272, 283, 289 des Bereichs 250 des Speichers 40 ausgeführt, also insbesondere spezifiziert und aufgerufen, werden.

Jede der vorgegebenen Speicheradressen260, 262, 264, 272, 283, 289 im Bereich 250 des Speichers 40 ist mit einer Informationseinheit 362, 364, 372 des Datenträgers 10 verknüpft. Informationseinheiten können, wie vorstehend erwähnt, beispielsweise entsprechende auf dem Datenträger 10 durch die Steuereinrichtung 30 ausführbare Zusatzfunktionalitäten 362, 364 in Form ausführbaren Programmcodes sowie dazugehörige Eingabe- oder Parameterdaten 372 sein. Informationseinheiten können in allgemeiner Weise aber auch lediglich Zeichen oder Zeichenketten sein, die verwendet werden, um eine beliebige Information zu kodieren, beispielsweise um eine weitere Zusatzfunktionalität zu kodieren oder um einen speziellen, nicht bereits als Informationseinheit gespeicherten Parameter- oder Eingabedatensatz zu definieren.

Die Steuereinrichtung 30 ist eingerichtet, jeden Zugriff auf eine der vorgegebenen Speicheradressen 260, 262, 264, 272, 283, 289 auszuwerten und als Eingabe der mit den entsprechenden Speicheradressen verknüpften Informationseinheiten 362, 364, 372 zu verarbeiten. Im einfachsten Fall interpretiert die Steuereinrichtung 30 beispielsweise einen lesenden Zugriff auf die vorgegebene Speicheradresse 262, welche mit der Informationseinheit 362 in Form eines Kommandos zum Ausführen einer Authentifizierungsfunktionalität verknüpft ist, als Aufruf der entsprechenden Applikation 362 und startet diese (wie nachfolgend genauer beschrieben). Weitere lesende Zugriffe, beispielsweise auf die vorgegebene Speicheradresse 372, ermöglichen es einem Nutzer, zum Ausführen des Kommandos 362 Parameterdaten 372 zu definieren, welche als Informationseinheit mit der vorgegebenen Speicheradresse 272 verknüpft sind. Nicht bereits als Informationseinheiten in der beschriebenen Weise vorkonfigurierte Daten können durch lesenden Zugriff auf solche vorgegebenen Speicheradressen 283, 287 an die Steuereinrichtung 30 übermittelt werden, die mit Informationseinheiten verknüpft sind, die einzelne Zeichen oder Zeichenketten eines vorgegebenen Alphabets kodieren. Abhängig von den Fähigkeiten der Steuereinrichtung 30 ist auf diese Weise eine nahezu freie Programmierung des Datenträgers 10 möglich, beispielsweise wenn die Steuereinrichtung 30 einen geeigneten Compiler oder Interpreter umfasst. Dazu können entsprechend erforderliche Lesekommandozugriffe, beispielsweise gesteuert durch das mit dem Datenträger 10 über die Datenkommunikationsschnittstelle 20 verbundene Datenverarbeitungsendgerät, automatisiert erfolgen.

Ein Verknüpfen der vorgegebenen Speicheradressen 260, 262, 264, 272, 283, 289 mit den entsprechenden Informationseinheiten 362, 364, 372 erfolgt beispielsweise dadurch, dass die vorgegebenen Speicheradressen 260, 262, 264, 272, 283, 289 Referenzen auf die Informationseinheiten 362, 364, 372 umfassen oder aber diese selbst speichern, etwa wenn es sich bei den Informationseinheiten lediglich um geringe Datenmengen, wie beispielsweise einzelne Zeichen oder kurze Zeichenketten, handelt.

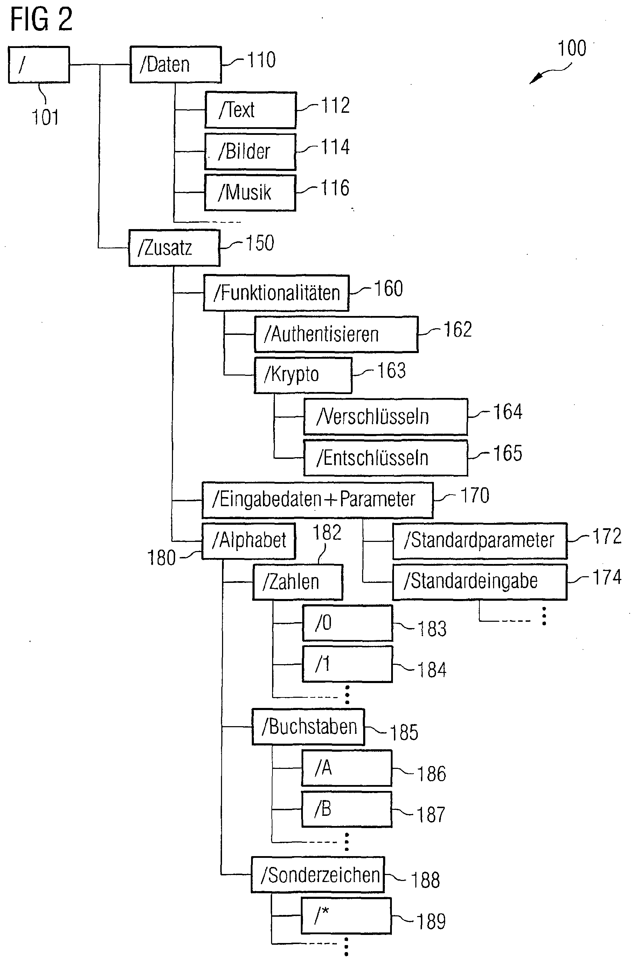

Um einem Nutzer den Zugriff auf die vorgegebenen Speicheradressen 250 zu erleichtern und um diese thematisch zu organisieren, ist in dem Speicher 40 ein virtuelles Dateisystem 100 bereitgestellt, welches in Fig. 2 schematisch dargestellt ist. Unterhalb eines Wurzelverzeichnisses 101 sind auf der ersten Ebene zwei Unterverzeichnisse 110 und 150 angelegt. Im Unterverzeichrus 110 ("Daten"), welches dem Bereich 210 des Speichers 40 zugeordnet ist, finden sich weitere Unterverzeichnisse, welche der Nutzer des Datenträgers in der Regel beliebig anlegen und löschen kann, und welche den Bereich 210 zum Speichern persönlicher Daten weiter strukturieren, indem beispielsweise Unterverzeichnisse zum Speichern von Texten, Bildern und Musikdaten 112,114,116 angelegt werden. Im Unterverzeichnis 150 ("Zusatz") finden sich Verzeichnisse und Dateien, welche den vorgegebenen Speicheradressen 250 des Speichers 40 zugeordnet sind. Dieser Anteil des Dateisystems 100 wird von der Steuereinrichtung 30 exklusiv verwaltet und kann in der Regel von einem Nutzer des Datenträgers 10 nicht verändert werden. Es ist allerdings möglich, dass die Steuereinrichtung 30 die Struktur des Unterverzeichnisses 150 dynamisch anpasst, beispielsweise wenn der Nutzer neue Daten in dem Bereich 210 speichert, welche dann als Eingabedaten einer Verschlüsselungsfunktionalität angesehen werden können. Der Speicherbereich 300 ist in dem Dateisystem 100 nicht zu sehen, da es für einen Nutzer des Datenträgers 10 keine Veranlassung gibt, auf einen in diesem Speicherbereich gespeicherten Datensatz zuzugreifen.

Wenn nun auf ein Verzeichnis oder eine Datei in dem Unterverzeichnis 150 des Dateisystems 100 lesend zugegriffen wird (ein schreibender Zugriff ist prinzipiell ausgeschlossen und wird von der Steuereinrichtung 30 verhindert), so interpretiert die Steuereinrichtung 30 diesen Zugriff wie einen Zugriff auf diejenige vorgegebene Speicheradresse, welcher das entsprechende Verzeichnis bzw. die entsprechende Datei zugeordnet ist, beispielsweise mittels einer Dateizuordnungstabelle (FAT, "file allocation table"). Ein Zugriff auf die Datei 162 ("Authentisieren") im Verzeichnis 160 ("Funktionalitäten") wird von der Steuereinrichtung 30 wie ein lesender Zugriff auf die dieser Datei 162 zugeordneten vorgegebenen Speicheradresse 262 interpretiert, welche ihrerseits mit der Informationseinheit 362 verknüpft ist. D.h. die Steuereinrichtung 30 startet die Authentisierungsapplikation 362. In analoger Weise können weitere Funktionalitäten, beispielsweise Kryptofunktionalitäten, gestartet werden, welche im Dateisystem 100 über das Unterverzeichnis 163 ("Krypto") als Dateien 164 ("Verschlüsseln"), 165 ("Entschlüsseln") ansprechbar sind.

Eine Übergabe von Parameter- oder Eingabedaten an die Steuereinrichtung 30 kann mittels lesenden Zugriffs auf entsprechende Dateien (nicht gezeigt) in den Verzeichnissen 170,172,174 erfolgen. Alternativ oder zusätzlich kann es vorgesehen sein, dass Unterverzeichnisse des Funktionalitätenverzeichnisses 160 neben den Dateien zu den Zusatzfunktionalitäten auch Dateien zu den Parameterdatensätzen oder Eingabedatensätzen zu den Zusatzfunktionalitäten umfassen, d.h. die Parameter und Eingabedaten also jeweils bei den entsprechenden Zusatzfunktionalitäten angeordnet sind, zu denen sie passen.

Im Unterverzeichnis 180 (Alphabet) sind drei weitere Unterverzeichnisse 182 ("Zahlen"), 185 ("Buchstaben") und 188 ("Sonderzeichen") eingerichtet, die ihrerseits jeweils Dateien 183,184 umfassen, welche einzelnen Zahlen "0", "1" etc. entsprechen, weiterhin solche Dateien 186,187, die einzelnen Buchstaben "A", "B" etc. entsprechen, und solche Dateien 189, welche Sonderzeichen, beispielsweise "*", kodieren, wenn lesend auf sie zugegriffen wird. Alternativ kann das Unterverzeichnis 180 auch derart angelegt sein, dass entsprechenden Zeichen oder Zeichenketten einheitlich, z.B. binär, kodiert werden und verschiedene Unterverzeichnisse angelegt werden, die jeweils alle Dateien enthalten, um Zeichenketten vorgegebener Länge zu kodieren. Ein erstes Unterverzeichnis könnte alle Dateien enthalten, welche zum Kodieren eines Zeichens des Alphabets dient, ein zweites Unterverzeichnis alle Dateien zu zweielementigen Zeichenketten, ein drittes Unterverzeichnis alle Dateien zu vierelementigen Zeichenketten etc. Auf diese Weise kann mit einem Lesekommandozugriff eine beliebige Information an die Steuereinrichtung 30 übermittelt werden, welche durch eine vorgegebene Anzahl von Zeichen über dem Alphabet kodierbar ist. Längere Zeichenketten können in derselben Weise aus wenigen kürzeren zusammengesetzt werden. Über geeignete Lesezugriffe auf Dateien in einem solchen Unterverzeichnis 180 kann beliebige Information an die Steuereinrichtung 30 des Datenträgers 10 übermittelt werden.

Das Dateisystem kann insbesondere ein virtuelles Dateisystem sein. Somit wird weniger Speicherplatz für die Kodierung der Aufrufe der Zusatzfunktionalität verbraucht. Das Lesekommando kann also auf nicht im Speicher des Datenträgers vorhandene (virtuelle) Speicheradressen zugreifen. Beispielsweise eine achtelementige Zeichenkette ist somit - auch ohne einen entsprechend großen Speicher - mit einem einzigen Lesekommando kodierbar.

Im Folgenden wird das Ausführen einer speziellen Zusatzfunktionalität 362 des Datenträgers 10 mittels von außerhalb des Datenträgers angewiesenen Lesezugriffen auf vorgegebene Speicheradressen 262 des Speichers 40 des Datenträgers 10 beispielhaft beschrieben. Die Zusatzfunktionalität 362 betrifft das Authentisieren eines Servers im Internet gegenüber dem Datenträger 10, wobei dieses Authentisieren in Form eines Challenge-Response-Verfahrens durchgeführt wird. Dazu wird der Datenträger 10 über ein geeignetes Lesegerät mit einem Datenverarbeitungsendgerät verbunden. Auf dem Datenverarbeitungsendgerät wird eine Browser-Applikation ausgeführt, welche berechtigt ist, lesend auf das Dateisystem 100 des Datenträgers 10 zuzugreifen.

In einen ersten Schritt greift die Browser-Applikation lesend auf die Datei 162 im Unterverzeichnis 160 des Dateisystems 100 zu. Die Steuereinrichtung 30 des Datenträgers 10 wertet diesen Zugriff als einen Zugriff auf die dieser Datei 162 zugeordneten vorgegebenen Speicheradresse 262, welche ihrerseits mit der Informationseinheit 362 in Form der Authentisierungsfunktionalität 362 verknüpft ist.

Die Authentisierungsfunktionalität 362 wird gestartet und erzeugt dynamisch eine HTML-Datei, durch welche die Browser-Applikation auf dem Datenverarbeitungsendgerät veranlasst wird, eine Datenkommunikationsverbindung mit dem Server aufzubauen und eine so genannte "challenge", beispielsweise in Form einer Zufallszahl, an den Server zu senden.

Der Server empfängt die Nachricht des Datenträgers 10 über den Browser, erkennt sie als ersten Schritt eines Authentifikationsverfahrens und generiert eine Antwort, eine "response", die sich in vorgegebener, in der Regel geheimer Weise von der empfangenen "challenge" ableitet. Anschließend sendet der Server diese Antwort, in Form einer oder mehrerer HTML-Dateien, über den Browser an den Datenträger 10. Die HTML-Datei(en) umfasst/umfassen die "response" bzw. Anteile davon derart, dass der Browser bei Empfang der HTML-Datei(en) jeweils veranlasst wird, auf eine durch die Antwort-Datei vorgegebene Datei in dem Dateisystem 100 des Datenträgers 10 lesend zuzugreifen. Angenommen, die "response" des Servers auf die empfangene "challenge" lautet "ABA*01", so könnte der Server diese "response" dadurch an den Datenträger 10 übermitteln, dass er sechs HTML-Dateien an den Browser sendet, welche diesen nacheinander veranlassen, auf die Dateien 186,187,186, 189, 183, 184 ("A", "B", "A", "*", "0", "1") in den Unterverzeichnissen 185,182,188 (/Zusatz/ Alphabet/{Buchstaben, Sonderzeichen, Zahlen}) mittels eines Lesekommandos zuzugreifen. Die Steuereinrichtung 30 des Datenträgers 10 wertet diese Lesezugriffe aus, erkennt sie als von dem Server gesendete "response" auf die "challenge", überprüft deren Korrektheit, d.h. authentifiziert den Server, und erzeugt, abhängig vom Ergebnis der Prüfung, erneut dynamisch eine HTML-Datei, welche den Browser veranlasst, eine in der HTML-Datei kodierte Nachricht an den Server zu senden, um mitzuteilen, ob die Authentisierung erfolgreich war oder nicht.

Mit dem beschriebenen Verfahren kann sich der Server gegenüber dem Datenträger 10 authentisieren, ohne dass dazu ein Schreibzugriff auf den Speicher 40 des Datenträgers 10 erforderlich ist. Weiterhin kann darauf verzichtet werden, auf dem Datenverarbeitungsendgerät neue Treibersoftware zu installieren, welche die Authentifizierungsfunktionalität des Datenträgers 10 direkt unterstützt. Es reicht aus, dass der Browser, eine in der Regel auf jedem Datenverarbeitungsendgerät installierte Standardapplikation, lesend auf das Dateisystem 100 des Datenträgers 10 zugreifen kann. Jedes gängige, auf dem Datenverarbeitungsendgerät installierte Betriebssystem unterstützt einen solchen Zugriff, auch für Nutzer mit einer eingeschränkten Berechtigung. Lediglich die vorgegebene Speicheradressen in Speicherbereich 250 des Datenträgers 10, auf welche während des Ausführens des Authentifikationsverfahrens durch den Browser zugegriffen wird, müssen die entsprechende Leseberechtigung aufweisen. Diese Berechtigung wird aber von der Steuereinrichtung 30 des Datenträgers 10 in geeigneter Weise vorgegeben.

## Patentansprüche

1. Verfahren in einem portablen Datenträger (10) mit einem Speicher (40), auf welchen mittels herkömmlicher Lesekommandos von außerhalb des Datenträgers lesend zugegriffen werden kann, wobei in dem Datenträger in Antwort auf ein empfangenes herkömmliches Lesekommando eine Zusatzfunktionalität (362; 364) aufgerufen wird; **dadurch gekennzeichnet, dass** die Zusatzfunktionalität (362; 364) durch zumindest ein weiteres, empfangenes, herkömmliches auf einer anderen vorgegebenen Adresse gengreifendes Lesekommando durch Eingabedaten oder Parametadaten weiter spezifiziert wird.

2. Verfahren nach Anspruch 1, **dadurch gekennzeichnet, dass** beim Spezifizieren die Zusatzfunktionalität (362; 364) durch einen Zugriff des weiteren herkömmlichen Lesekommandos auf den Speicher (40) des Datenträgers (10) kodiert wird.

3. Verfahren nach Anspruch 1 oder 2, **dadurch gekennzeichnet, dass** beim Spezifizieren Eingabedaten und Parameterdaten (372) der Zusatzfunktionalität (362; 364) durch das weitere herkömmlichen Lesekommando definiert werden.

4. Verfahren nach einem der Ansprüche 1 bis 3, **dadurch gekennzeichnet, dass** die Zusatzfunktionalität (362; 364) durch die folgenden Unterschritte ausgeführt wird:
- Verknüpfen von vorgegebenen Speicheradressen (260; 262; 264; 272; 283; 287) des Speichers (40) mit Informationseinheiten (362; 364; 372) des Datenträgers (10);
- Zugreifen auf verschiedene der vorgegebenen Speicheradressen (260; 262; 264; 272; 283; 287) mittels verschiedener Zugriffe durch jeweils herkömmliche Lesekommandos zum Aufrufen und Spezifizieren der Zusatzfunktionalität (362; 364);
- Verarbeiten der Informationseinheiten (362; 364; 372), welche mit den vorgegebenen Speicheradressen (260; 262; 264; 272; 283; 287) verknüpft worden sind, auf die mittels der herkömmlichen Lesekommandos zugegriffen worden ist, durch eine Steuereinrichtung (30) des Datenträgers (10).

5. Verfahren nach Anspruch 4, **dadurch gekennzeichnet, dass** als eine Informationseinheit (362; 364) des Datenträgers (10) eine in dem Speicher (40) gespeicherte, durch die Steuereinrichtung (30) ausführbare Zusatzfunktionalität (362; 364) bereitgestellt wird.

6. Verfahren nach Anspruch 4 oder 5, **dadurch gekennzeichnet, dass** als eine Informationseinheit (372) Eingabedaten oder Parameterdaten (372) für die Zusatzfunktionalität (362; 364) bereitgestellt werden.

7. Verfahren nach einem der Ansprüche 4 bis 6, **dadurch gekennzeichnet, dass** als eine Informationseinheit Zeichen (183; 184; 186; 187; 198) oder Zeichenketten eines vorgegebenen Alphabets (180) zum Kodieren der Zusatzfunktionalität (362; 364) oder zum Definieren von Eingabedaten oder Parameterdaten (372) mittels einer Folge solcher Zeichen (183; 184; 186; 187; 189) oder Zeichenketten bereitgestellt werden.

8. Verfahren nach einem der Ansprüche 4 bis 7, **dadurch gekennzeichnet, dass** eine vorgegebene Speicheradresse (262; 264; 272) dadurch mit einer Informationseinheit (362; 364; 372) verknüpft wird, dass sie eine Referenz auf die Informationseinheit (362; 364; 372) umfasst.

9. Verfahren nach einem der Ansprüche 4 bis 7, **dadurch gekennzeichnet, dass** eine vorgegebene Speicheradresse (283; 287) dadurch mit einer Informationseinheit verknüpft wird, dass sie die Informationseinheit speichert.

10. Verfahren nach einem der Ansprüche 4 bis 9, **dadurch gekennzeichnet, dass** die Steuereinrichtung (30) beim Verarbeiten der Informationseinheiten (362; 364; 372) abhängig von den Informationseinheiten (362; 364; 372) dynamisch Daten erzeugt.

11. Verfahren nach einem der Ansprüche 4 bis 10, **dadurch gekennzeichnet, dass** in dem Speicher (40) ein virtuelles Dateisystem (100) bereitgestellt wird, wobei die vorgegebenen Speicheradressen (260; 262; 264; 272; 283; 287) eindeutig Verzeichnissen (160) und Dateien (162; 164; 172; 183; 187) des virtuellen Dateisystems (100) zugeordnet werden.

12. Verfahren nach Anspruch 5 und 11, **dadurch gekennzeichnet, dass** in dem Dateiverzeichnis (100) ein Zusatzfunktionalitätenverzeichnis (160) bereitgestellt wird, wobei eine Datei (162; 164) in dem Zusatzfunktionalitätenverzeichnis (160) einer vorgegebenen Speicheradresse (262; 264) zugeordnet wird, die mit der von der Steuereinrichtung (30) ausführbaren Zusatzfunktionalität (362; 364) verknüpft ist.

13. Verfahren nach Anspruch 6 und einem der Ansprüche 11 oder 12, **dadurch gekennzeichnet, dass** in dem Dateiverzeichnis (100) ein Eingabe- und Parameterdatenverzeichnis (170) bereitgestellt wird, wobei eine Datei (172) im dem Eingabe- und Parameterdatenverzeichnis (170) einer vorgegebenen Speicheradresse zugeordnet (272) wird, die mit Eingabedaten oder Parameterdaten (372) verknüpft ist.

14. Verfahren nach Anspruch 7 und einem der Ansprüche 11,12 oder 13, **dadurch gekennzeichnet, dass** in dem Dateiverzeichnis (100) ein Alphabetverzeichnis (180) bereitgestellt wird, wobei eine Datei (183; 187) in dem Alphabetverzeichnis (180) einer vorgegebenen Speicheradresse (283; 287) zugeordnet wird, welche mit einem Zeichen oder einer Zeichenkette des vorgegebenen Alphabets verknüpft ist.

15. Portabler Datenträger (10), umfassend einen Speicher (40) und eine Steuereinrichtung (30) zum Ausführen einer Zusatzfunktionalität (362; 364) in dem Datenträger (10) sowie eine Datenkommunikationsschnittstelle (20), wobei die Steuereinrichtung (30) eingerichtet ist, die Zusatzfunktionalität aufgrund des einen Zugriffs eines von außerhalb des Datenträgers (10) angewiesenen herkömmlichen Lesekommandos auf den Speicher (40) aufzurufen, **dadurch gekennzeichnet, dass** die Steuereinrichtung (30) zum Ausführen eines Verfahrens nach einem der Ansprüche 1 bis 14 eingerichtet ist.

16. System, umfassend einen portablen Datenträger (10) nach Anspruch 15 sowie ein Datenverarbeitungsendgerät mit einer Leseeinrichtung zum Zugreifen auf den Datenträger (10) über die Datenkommunikationsschnittstelle mittels eines herkömmlichen Lesekommandos, wobei das System eingerichtet ist, ein Verfahren nach einem der Ansprüche 1 bis 14 auszuführen.

## Claims

1. A method in a portable data carrier (10) with a memory (40) which can be accessed from outside the data carrier in reading fashion by means of conventional read commands, wherein an additional functionality (362; 364) is called up in the data carrier in response to a received conventional read command; **characterized in that** the additional functionality (362; 364) is specified by at least one further received conventional read command accessing a different predetermined address, by input data or parameter data.

2. The method according to claim 1, **characterized in that,** upon the specifying, the additional functionality (362; 364) is coded by an access of the further conventional read command to the memory (40) of the data carrier (10).

3. The method according to claim 1 or 2, **characterized in that,** upon the specifying, input data and parameter data (372) of the additional functionality (362; 364) are defined by the further conventional read command.

4. The method according to any of the claims 1 to 3, **characterized in that** the additional functionality (362; 364) is executed by the following substeps:
- linking predetermined memory addresses (260; 262; 264; 272; 283; 287) of the memory (40) with information units (362; 364; 372) of the data carrier (10);
- accessing different ones of the predetermined memory addresses (260; 262; 264; 272; 283; 287) by means of different accesses by respective conventional read commands for calling up and specifying the additional functionality (362; 364);
- processing the information units (362; 364; 372) which have been linked with the predetermined memory addresses (260; 262; 264; 272; 283; 287) which have been accessed by means of the conventional read commands, by a control device (30) of the data carrier (10).

5. The method according to claim 4, **characterized in that** as an information unit (362; 364) of the data carrier (10) there is made available an additional functionality (362; 364) stored in the memory (40) and executable by the control device (30).

6. The method according to claim 4 or 5, **characterized in that** as an information unit (372) there are made available input data or parameter data (372) for the additional functionality (362; 364).

7. The method according to any of the claims 4 to 6, **characterized in that** as an information unit there are made available characters (183; 184; 186; 187; 198) or character strings of a predetermined alphabet (180) for coding the additional functionality (362; 364) or for defining input data or parameter data (372) by means of a sequence of such characters (183; 184; 186; 187; 189) or character strings.

8. The method according to any of the claims 4 to 7, **characterized in that** a predetermined memory address (262; 264; 272) is linked with an information unit (362; 364; 372) by comprising a reference to the information unit (362; 364; 372).

9. The method according to any of the claims 4 to 7, **characterized in that** a predetermined memory address (283; 287) is linked with an information unit by storing the information unit.

10. The method according to any of the claims 4 to 9, **characterized in that** the control device (30) generates data dynamically upon processing the information units (362; 364; 372) in dependence on the information units (362; 364; 372).

11. The method according to any of the claims 4 to 10, **characterized in that** a virtual file system (100) is made available in the memory (40), wherein the predetermined memory addresses (260; 262; 264; 272; 283; 287) are associated uniquely with directories (160) and files (162; 164; 172; 183; 187) of the virtual file system (100).

12. The method according to claim 5 and 11, **characterized in that** an additional functionality directory (160) is made available in the file directory (100), wherein a file (162; 164) in the additional functionality directory (160) is associated with a predetermined memory address (262; 264) which is linked with the additional functionality (362; 364) executable by the control device (30).

13. The method according to claim 6 and either of claims 11 or 12, **characterized in that** an input data and parameter data directory (170) is made available in the file directory (100), wherein a file (172) in the input data and parameter data directory (170) is associated (272) with a predetermined memory address which is linked with input data or parameter data (372).

14. The method according to claim 7 and any of the claims 11, 12 or 13, **characterized in that** an alphabet directory (180) is made available in the file directory (100), wherein a file (183; 187) in the alphabet directory (180) is associated with a predetermined memory address (283; 287) which is linked with a character or a character string of the predetermined alphabet.

15. A portable data carrier (10), comprising a memory (40) and a control device (30) for executing an additional functionality (362; 364) in the data carrier (10), and a data communication interface (20), wherein the control device (30) is adapted to call up the additional functionality due to the one access of a conventional read command ordered from outside the data carrier (10) to the memory (40), **characterized in that** the control device (30) is adapted to execute a method according to any of the claims 1 to 14.

16. A system, comprising a portable data carrier (10) according to claim 15 and a data processing terminal with a reading device for accessing the data carrier (10) via the data communication interface by means of a conventional read command, wherein the system is adapted to execute a method according to any of the claims 1 to 14.

## Revendications

1. Procédé dans un support de données (10) portable comprenant une mémoire (40), sur lequel, au moyen d'ordres de lecture conventionnels depuis l'extérieur du support de données portable, il est possible d'accéder en lecture, cependant que, dans le support de données, en réponse à un ordre de lecture conventionnel reçu, une fonctionnalité supplémentaire (362; 364) est appelée; **caractérisé en ce que** la fonctionnalité supplémentaire (362; 364) est plus amplement spécifiée par au moins un autre ordre de lecture conventionnel reçu accédant à une autre adresse prédéterminée, par des données d'entrées ou de paramètres.

2. Procédé selon la revendication 1, **caractérisé en ce que**, lors de la spécification , la fonctionnalité supplémentaire (362; 364) est codée par un accès de l'autre ordre de lecture conventionnel à la mémoire (40) du support de données (10).

3. Procédé selon la revendication 1 ou 2, **caractérisé en ce que**, lors de la spécification , des données d'entrées ou de paramètres (372) de la fonctionnalité supplémentaire (362; 364) sont définies par l'autre ordre de lecture conventionnel.

4. Procédé selon une des revendications de 1 à 3, **caractérisé en ce que** la fonctionnalité supplémentaire (362; 364) est exécutée par les sous-étapes suivantes:
- liaison d'adresses mémoire (260; 262; 264; 272; 283; 287) prédéterminées de la mémoire (40) avec des unités d'information (362; 364; 372) du support de données (10);
- accès à différentes des adresses mémoire (260; 262; 264; 272; 283; 287) prédéterminées, au moyen de différents accès par respectivement des ordres de lecture conventionnels, pour appeler et spécifier la fonctionnalité supplémentaire (362; 364);
- traitement des unités d'information (362; 364; 372), lesquelles ont été liées aux adresses mémoire (260; 262; 264; 272; 283; 287) prédéterminées auxquelles il a été accédé au moyen des ordres de lecture conventionnels, par un dispositif de commande (30) du support de données (10).

5. Procédé selon la revendication 4, **caractérisé en ce que**, en tant qu'une unité d'information (362; 364) du support de données (10), une fonctionnalité supplémentaire (362; 364) mémorisée dans la mémoire (40) et exécutable par le dispositif de commande (30) est mise à disposition.

6. Procédé selon la revendication 4 ou 5, **caractérisé en ce que**, en tant qu'une unité d'information (372), des données d'entrées ou de paramètres (372) pour la fonctionnalité supplémentaire (362; 364) sont mises à disposition.

7. Procédé selon une des revendications de 4 à 6, **caractérisé en ce que**, en tant qu'une unité d'information, des caractères (183; 184; 186; 187; 198) ou des chaînes de caractères d'un alphabet (180) prédéterminé pour coder la fonctionnalité supplémentaire (362; 364) ou pour définir des données d'entrées ou des données de paramètres (372) sont mises à disposition au moyen d'une succession de tels caractères (183; 184; 186; 187; 189) ou chaînes de caractères.

8. Procédé selon une des revendications de 4 à 7, **caractérisé en ce qu'**une adresse mémoire (262; 264; 272) prédéterminée est liée à une unité d'information (362; 364; 372) moyennant le fait qu'elle comprend une référence à l'unité d'information (362; 364; 372).

9. Procédé selon une des revendications de 4 à 7, **caractérisé en ce qu'**une adresse mémoire (283; 287) prédéterminée est liée à une unité d'information moyennant le fait qu'elle mémorise l'unité d'information.

10. Procédé selon une des revendications de 4 à 9, **caractérisé en ce que** le dispositif de commande (30), lors du traitement des unités d'information (362; 364; 372), génère des données dynamiquement indépendamment des unités d'information (362; 364; 372).

11. Procédé selon une des revendications de 4 à 10, **caractérisé en ce que**, dans la mémoire (40), un système virtuel de données (100) est mis à disposition, les adresses mémoire (260; 262; 264; 272; 283; 287) prédéterminées étant univoquement associées à des répertoires (160) et à des données (162; 164; 172; 183; 187) du système virtuel de données (100).

12. Procédé selon la revendication 5 et 11, **caractérisé en ce que**, dans le répertoire de données (100), un répertoire de fonctionnalités supplémentaires (160) est mis à disposition, un fichier (162; 164) dans le répertoire de fonctionnalités supplémentaires (160) étant associé à une adresse mémoire (262; 264) prédéterminée qui est liée à la fonctionnalité supplémentaire (362; 364) exécutable par le dispositif de commande (30).

13. Dispositif selon la revendication 6 et une des revendications 11 ou 12, **caractérisé en ce que**, dans le répertoire de données (100), un répertoire d'entrées ou de paramètres (170) est mis à disposition, un fichier (172) dans le répertoire d'entrées ou de paramètres (170) étant associé (272) à une adresse mémoire prédéterminée qui est liée aux données d'entrées ou aux données de paramètres (372).

14. Dispositif selon la revendication 7 et une des revendications 11, 12 ou 13, **caractérisé en ce que**, dans le répertoire de données (100), un répertoire alphabétique (180) est mis à disposition, un fichier (183; 187) dans le répertoire alphabétique (180) étant associé à une adresse mémoire prédéterminée (283; 287), laquelle est liée à un caractère ou à une chaîne de caractères de l'alphabet prédéterminé.

15. Support de données (10) comprenant une mémoire (40) et un dispositif de commande (30) pour exécuter une fonctionnalité supplémentaire (362; 364) dans le support de données (10) ainsi qu'une interface de communication de données (20), le dispositif de commande (30) étant configuré pour, en conséquence du un accès d'un ordre de lecture conventionnel, donné depuis l'extérieur du support de données (10), à la mémoire (40), appeler la fonctionnalité supplémentaire, **caractérisé en ce que** le dispositif de commande (30) est configuré pour l'exécution d'un procédé selon une des revendications de 1 à 14.

16. Système comprenant un support de données (10) portable selon la revendication 15 ainsi qu'un terminal de traitement de données doté d'un équipement de lecture pour accéder au support de données (10) par l'intermédiaire de l'interface de communication de données au moyen d'un ordre de lecture conventionnel, le système étant configuré pour exécuter un procédé selon une des revendications de 1 à 14.
